# FASCICULE DE BREVET EUROPEEN

(11) **EP 3 060 929 B1**
(45) Date de publication et mention de la délivrance du brevet: **15.01.2020**
(21) Numéro de dépôt: 14796798.8
(22) Date de dépôt: 14.10.2014
(51) Int. Cl.: G01P 13/02

(54) **PROCEDE ET DISPOSITIF POUR LA MESURE DE L'INCIDENCE ET DU DERAPAGE D'UN AERONEF**
VERFAHREN UND VORRICHTUNG ZUR MESSUNG DES WINKELS EINES ANGRIFFS UND DES SCHIEBEWINKELS EINES FLUGZEUGS
METHOD AND DEVICE FOR MEASURING THE ANGLE OF ATTACK AND THE SIDESLIP OF AN AIRCRAFT

(30) Priorité: 22.10.2013 FR 1302442
(43) Date de publication de la demande: 31.08.2016
(73) Titulaire: ArianeGroup SAS, 75015 Paris (FR)
(72) Inventeur: RUFFINO, Fabrice, F-78510 Triel sur Seine (FR)
(74) Mandataire: Brevalex
(86) Numéro de dépôt international: PCT/FR2014/000222
(87) Numéro de publication internationale: WO 2015/059370

(56) Documents cités:
- CH-A- 478 412
- FR-A- 1 069 339
- FR-A- 1 270 264
- US-A- 3 069 906
- US-A- 3 329 016
- US-A- 3 677 086
- US-A- 3 686 937
- US-A- 5 544 526

## Description

La présente invention concerne un procédé et un dispositif pour la mesure de l'incidence d'un aéronef, ce procédé et ce dispositif pouvant plus généralement mesurer les paramètres air dudit aéronef et étant insensibles au nombre de Mach, à la température et aux erreurs de dérive et de biais.

Pour mesurer l'angle d'incidence d'un aéronef, on connaît déjà, par exemple par le document US 3.329.016, une sonde pourvue, à son extrémité avant, d'un capteur directif central disposé à l'intersection des plans horizontal et vertical médians de ladite sonde et d'au moins deux capteurs directifs excentrés, parallèles audit capteur directif central et disposés à égale distance de ce dernier, de part et d'autre dudit plan horizontal médian de ladite sonde. Une telle sonde est articulée sur l'aéronef avec ses trois capteurs dirigés vers l'avant. Ainsi, en cas d'incidence non nulle, le vent relatif est incliné par rapport à la sonde, de sorte que les capteurs directifs latéraux perçoivent des pressions totales, et donc des vitesses air, différentes. D'une telle différence de pression, on peut, par étalonnage, déterminer l'incidence de l'aéronef.

Par ailleurs :
- le document US 3.686.937 décrit un dispositif de détection et de vitesse de flux comprenant deux paires de détecteurs arrangés sous un angle de 90 degrés et connectés à un capteur de pression différentiel;
- le document CH 478 412 décrit une sonde capteur de débit ;
- le document US 3.069.906 décrit un dispositif permettant de déterminer un angle d'attaque ;
- le document US 5.544.526 décrit un système de capteurs de pression dynamique et statique et d'angle d'attaque.

La présente invention a pour objet de permettre à une telle sonde d'incidence d'indiquer le dérapage de l'aéronef et de mesurer la pression totale.

À cette fin, l'invention prévoit un procédé et dispositif pour la mesure de la pression totale, de l'angle d'incidence et de l'angle de dérapage selon les revendications indépendantes.

Dans la position inclinée combinée particulière résultant du procédé selon l'invention, il est évident que ladite sonde est alignée avec le vent relatif, en tenant compte du dérapage, ce dernier étant mesuré par ladite valeur particulière de l'angle de rotation dudit second axe d'articulation.

De préférence, au cours du vol dudit aéronef, on détermine en continu ledit angle d'inclinaison particulier que fait le plan horizontal médian de la sonde avec l'axe longitudinal de l'aéronef, ainsi que ladite valeur particulière de l'angle de rotation dudit second axe d'articulation.

Le capteur directif central, lesdits capteurs directifs médians excentrés et lesdits capteurs directifs latéraux peuvent être des capteurs de pression, particulièrement efficaces pour les vols aérobies subsoniques. Toutefois, ces capteurs peuvent être de tout type sensible à l'orientation du vent, comme des capteurs de force ou des capteurs de température. Par exemple, pour des vols supersoniques ou hypersoniques, il est avantageux que lesdits capteurs soient des thermocouples.

De préférence :
- pour faire tourner ladite sonde autour dudit premier axe d'articulation, on utilise un actionneur pourvu d'un organe d'actionnement mobile et on mesure ledit angle d'inclinaison particulier par la position correspondante dudit organe d'actionnement mobile de l'actionneur ; et
- pour faire tourner ladite sonde et ledit premier axe d'articulation autour dudit second axe d'articulation, on utilise un actionneur pourvu d'un organe d'actionnement mobile et on mesure ladite valeur de l'angle de rotation dudit second axe d'articulation par la position correspondante dudit organe d'actionnement mobile de cet actionneur.

La présente invention concerne de plus un aéronef comportant un dispositif de mesure d'incidence et de dérapage tel que décrit ci-dessus.

Les figures du dessin annexé feront bien comprendre comment l'invention peut être réalisée. Sur ces dessins, des références identiques désignent des éléments semblables.
La figure 1 est une vue schématique d'un dispositif connu pour la mesure de l'incidence d'un aéronef.
La figure 2 est une vue en bout de l'extrémité avant de la sonde du dispositif de la figure 1, sur laquelle on a porté les traces des plans horizontal H-H et vertical V-V médians de ladite sonde.
La figure 3 est une vue schématique d'un exemple de réalisation d'un dispositif mettant en oeuvre la présente invention.
La figure 4 est une vue en bout de l'extrémité avant de la sonde du dispositif de la figure 3, sur laquelle on a également porté les traces des plans horizontal H-H et vertical V-V médians de ladite sonde.

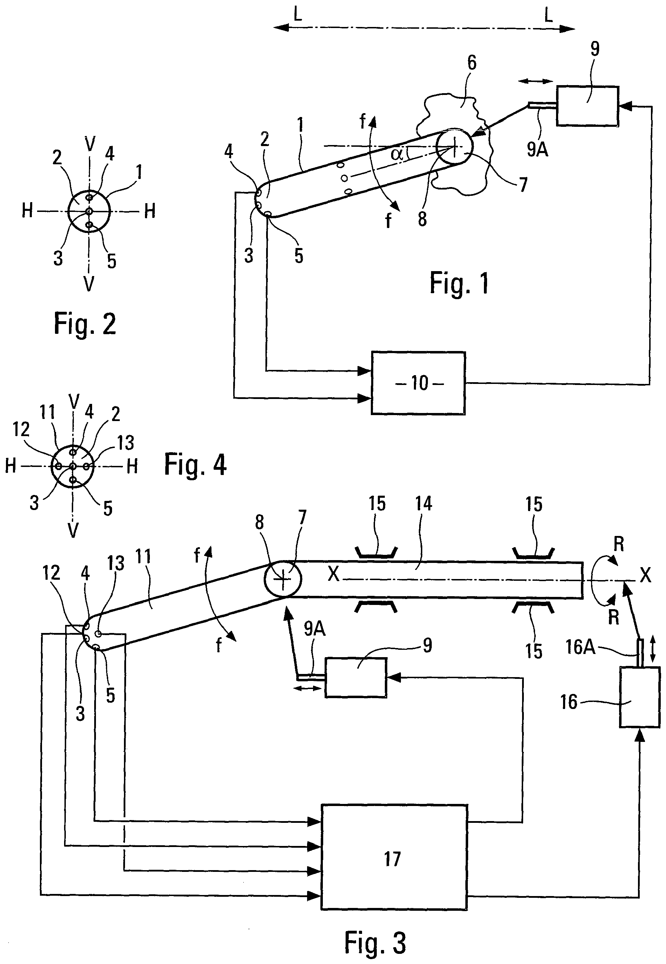

Le dispositif connu représenté schématiquement sur les figures 1 et 2, comporte une sonde 1 pourvue, à son extrémité avant profilée 2, d'un capteur directif central 3 disposé à l'intersection des plans médians horizontal H-H et vertical V-V de ladite sonde et de deux capteurs directifs médians excentrés 4 et 5, parallèles au capteur directif central 3 et disposés à égale distance de celui-ci, de part et d'autre du plan horizontal médian H-H et sensibles à l'orientation du vent.

Par son extrémité arrière, ladite sonde 1 est articulée sur un aéronef (uniquement représenté par son axe longitudinal L-L et par une portion de fuselage 6) grâce à un dispositif d'articulation 7 dont l'axe d'articulation 8 est parallèle au plan horizontal médian H-H de la sonde 1 et orthogonal à l'axe longitudinal L-L de l'aéronef.

Un actionneur 9, par exemple un vérin, pourvu d'un organe mobile d'actionnement 9A, par exemple un piston, peut faire tourner la sonde 1 autour de l'axe d'articulation 8, dans les deux sens, comme cela est indiqué par la double flèche f. L'actionneur 9 est commandé par une unité de contrôle 10, recevant les mesures effectuées par les capteurs directifs médians excentrés 4 et 5 et obligeant l'actionneur 9 à commander l'inclinaison de la sonde 1, autour de l'axe d'articulation 8, de façon que lesdites mesures des capteurs directifs médians excentrés 4 et 5 soient égales. Dans cette position, la sonde 1 est alignée avec le vent relatif, de sorte que son angle d'inclinaison α par rapport à l'axe longitudinal L-L de l'aéronef représente l'incidence de l'aéronef. La position correspondante de l'organe mobile d'actionnement 9A de l'actionneur 9 est la mesure pratique et aisée dudit angle d'inclinaison a, et donc, de l'incidence. Par ailleurs, le capteur directif central 3 délivre, pour cette position inclinée de la sonde 1 mesurant l'incidence de l'aéronef, la mesure fidèle de la grandeur qu'il détecte. Si ce capteur directif central 3 est un tube de Pitot, la mesure fidèle qu'il délivre est la pression totale.

Au cours du vol de l'aéronef, l'actionneur 9 et l'unité de contrôle 10 fonctionnent de préférence en continu, de sorte que, à chaque instant, la sonde 1 mesure, par son inclinaison a, l'angle d'incidence de l'aéronef.

Dans l'exemple de réalisation du dispositif, conforme à la présente invention et représenté schématiquement sur les figures 3 et 4, la sonde 1 est remplacée par une sonde 11 semblable, mais qui est pourvue, à son extrémité avant 2, en plus du capteur directif central 3 et des capteurs directifs médians excentrés 4 et 5, de deux capteurs directifs latéraux 12 et 13 de même nature, parallèles audit capteur directif central 3 et disposés à égale distance de celui-ci, de part et d'autre du plan vertical médian de la sonde 11.

Le dispositif d'articulation arrière 7 de la sonde 11 est solidaire en rotation d'une canne 14, montée rotative autour d'un axe d'articulation X-X parallèle à l'axe longitudinal L-L de l'aéronef, représenté sur la figure 3 par des paliers 15 pour la canne 14. Ainsi, dans le dispositif de la figure 3, la sonde 11 peut être entraînée en rotation combinée, à la fois autour de l'axe 8 orthogonal à l'axe longitudinal L-L de l'aéronef et autour de l'axe X-X, parallèle audit axe longitudinal L-L.

Un actionneur 16, par exemple un vérin, pourvu d'un organe mobile d'actionnement 16A, par exemple un piston, peut faire tourner la sonde 11 et l'axe d'articulation 8 autour de l'axe d'articulation X-X, dans les deux sens, comme cela est indiqué par la double flèche R-R. Les actionneurs 9 et 16 sont respectivement commandés par une unité de contrôle 17 recevant les mesures effectuées par les capteurs directifs médians excentrés 4 et 5 et les mesures effectuées par les capteurs directifs latéraux 12 et 13. L'unité de contrôle 17 oblige les actionneurs 9 et 16 à commander l'inclinaison de la sonde 11, respectivement autour des axes d'articulation 8 et X-X, de façon que, d'une part, les mesures des capteurs directifs médians excentrés 4 et 5 soient égales, et que, d'autre part, les mesures des capteurs directifs latéraux 12 et 13 soient également égales.

Ainsi, en cas de dérapage de l'aéronef, la sonde 11 peut être parfaitement alignée avec le vent relatif. Dans cette position combinée d'alignement avec le vent relatif, la valeur de l'inclinaison de la sonde 11 autour de l'axe 8 (par exemple indiquée par la position de l'organe mobile d'actionnement 9A) est représentative de l'incidence, alors que la valeur de l'inclinaison de la sonde 11 autour de l'axe X-X (par exemple indiquée par la position de l'organe mobile d'actionnement 16A) est représentative du dérapage de l'aéronef.

Bien entendu, au cours du vol de l'aéronef, on peut déterminer en continu les valeurs de l'incidence et du dérapage de l'aéronef de la manière décrite ci-dessus.

## Revendications

1. Procédé pour la mesure de la pression totale, de l'angle d'incidence et de l'angle de dérapage de l'axe longitudinal (L-L) d'un aéronef par rapport au vent relatif, procédé dans lequel on met en œuvre une sonde (11) pourvue, à son extrémité avant profilée (2), d'un capteur directif central (3) disposé à l'intersection des plans horizontal (H-H) et vertical (V-V) médians de ladite sonde et d'au moins deux capteurs directifs médians excentrés (4, 5), parallèles audit capteur directif central (3) et disposés à égale distance de ce dernier, de part et d'autre dudit plan horizontal médian (H-H) de ladite sonde, le capteur directif central (3) étant un tube de Pitot, procédé selon lequel :
- on articule ladite sonde sur ledit aéronef, autour d'un premier axe d'articulation (8) parallèle audit plan horizontal médian (H-H) de ladite sonde et orthogonal audit axe longitudinal (L-L) de l'aéronef ;
- on fait tourner ladite sonde (11) autour dudit premier axe d'articulation (8) pour faire prendre à ladite sonde la position inclinée particulière pour laquelle les mesures délivrées par lesdits capteurs directifs médians excentrés (4, 5) sont égales ; et
- on mesure l'angle d'inclinaison particulier (α) que fait, dans cette position inclinée particulière, ledit plan horizontal médian (H-H) de la sonde avec l'axe longitudinal (L-L) de l'aéronef, l'angle d'inclinaison particulier (α) étant représentatif de l'angle d'incidence,
- on équipe ladite sonde (11), à son extrémité avant et en plus dudit capteur directif central (3) et desdits capteurs directifs médians excentrés (4, 5), d'au moins deux capteurs directifs latéraux (12, 13), parallèles audit capteur directif central (3) et disposés à égale distance de ce dernier, de part et d'autre dudit plan vertical médian (V-V) de ladite sonde (11), et en ce que, de plus, pour mesurer le dérapage de l'aéronef :
- on articule ladite sonde (11) sur ledit aéronef, autour d'un second axe d'articulation (X-X) parallèle audit axe longitudinal (L-L) de l'aéronef ;
- on fait tourner ladite sonde (11) et ledit premier axe d'articulation (8) autour dudit second axe d'articulation (X-X) pour faire prendre à ladite sonde (11) la position inclinée combinée particulière pour laquelle non seulement les mesures délivrées par lesdits capteurs directifs médians excentrés (4, 5), mais encore les mesures délivrées par lesdits capteurs directifs latéraux (13, 14) sont égales ;
- on mesure la valeur particulière de l'angle de rotation dudit second axe d'articulation dans ladite position inclinée combinée particulière de la sonde (11), l'angle de rotation étant représentatif de l'angle de dérapage ;
- on mesure la pression totale par le capteur directif central (3).

2. Procédé selon la revendication 1,
**caractérisé en ce que**, au cours du vol de l'aéronef, on détermine en continu ledit angle d'inclinaison particulier que fait le plan horizontal médian (H-H) de la sonde avec l'axe longitudinal (L-L) de l'aéronef, ainsi que ladite valeur particulière de l'angle de rotation dudit second axe d'articulation.

3. Procédé selon l'une des revendications 1 ou 2,
**caractérisé en ce que** ledit capteur directif central (3), lesdits capteurs directifs médians excentrés (4, 5) et lesdits capteurs directifs latéraux (12, 13) sont de même nature.

4. Procédé selon la revendication 3,
**caractérisé en ce que** ledit capteur directif central (3), lesdits capteurs directifs médians excentrés (4, 5) et lesdits capteurs directifs latéraux (12, 13) sont des capteurs de pression.

5. Procédé selon la revendication 3,
**caractérisé en ce que** ledit capteur directif central (3), lesdits capteurs directifs médians excentrés (4, 5) et lesdits capteurs directifs latéraux (12, 13) sont des capteurs de température, tels que des thermocouples.

6. Procédé selon l'une des revendications 1 à 5,
**caractérisé** :
- **en ce que**, pour faire tourner ladite sonde (11) autour dudit premier axe d'articulation (8), on utilise un actionneur (9) pourvu d'un organe d'actionnement mobile (9A) et on mesure ledit angle d'inclinaison particulier (α) par la position correspondante dudit organe d'actionnement mobile (9A) de l'actionneur (9) ; et
- **en ce que**, pour faire tourner ladite sonde (11) et ledit premier axe d'articulation (8) autour dudit second axe d'articulation (X-X), on utilise un actionneur (16) pourvu d'un organe d'actionnement mobile (16A) et on mesure ladite valeur de l'angle de rotation dudit second axe d'articulation (X-X) par la position correspondante dudit organe d'actionnement mobile (16A) de cet actionneur (16).

7. Procédé selon l'une quelconque des revendications 1 à 6,
**caractérisé en ce que** :
- l'actionneur (9) faisant tourner la sonde (11) autour du premier axe d'articulation (8) correspond à un vérin et l'organe d'actionnement mobile (9A) correspond à un piston, ledit angle d'inclinaison particulier (α) étant mesuré par la position correspondante du piston,
- l'actionneur (16) faisant tourner la sonde (11) et le premier axe d'articulation (8) autour du second axe d'articulation (X-X) correspond à un vérin et l'organe d'actionnement mobile (16A) correspond à un piston, la valeur de l'angle de rotation du second axe d'articulation (X-X) étant mesuré par la position correspondante du piston.

8. Dispositif pour la mesure de la pression totale, de l'angle d'incidence (α) et de l'angle de dérapage de l'axe longitudinal (L-L) d'un aéronef par rapport au vent relatif, dispositif comportant une sonde (11) pourvue, à son extrémité avant profilée (2), d'un capteur directif central (3) disposé à l'intersection des plans horizontal (H-H) et vertical (V-V) médians de ladite sonde (11) et d'au moins deux capteurs directifs médians excentrés (4, 5), parallèles audit capteur directif central (3) et disposés à égale distance de ce dernier, de part et d'autre dudit plan horizontal médian (H-H) de ladite sonde, le capteur directif central (3) étant un tube de Pitot apte à mesurer la pression totale, ledit dispositif comportant :
• des premiers moyens (7) d'articulation de ladite sonde (11) sur ledit aéronef, autour d'un premier axe d'articulation (8) parallèle audit plan horizontal médian (H-H) de ladite sonde et orthogonal audit axe longitudinal (L-L) de l'aéronef ;
• des premiers moyens (9) pour faire tourner ladite sonde (11) autour dudit premier axe d'articulation (8) pour faire prendre à ladite sonde la position inclinée particulière pour laquelle les mesures délivrées par lesdits capteurs directifs médians excentrés (4, 5) sont égales ; et
• des premiers moyens (9A) pour mesurer l'angle d'inclinaison particulier que fait, dans cette position inclinée particulière, ledit plan horizontal médian (H-H) de la sonde avec l'axe longitudinal (L-L) de l'aéronef, l'angle d'inclinaison particulier (α) étant représentatif de l'angle d'incidence,
ladite sonde (11) étant pourvue, à son extrémité avant, en plus dudit capteur directif central (3) et desdits capteurs directifs médians excentrés (4, 5), d'au moins deux capteurs directifs latéraux (13, 14) parallèles audit capteur directif central (3) et disposés à égale distance de ce dernier, de part et d'autre dudit plan vertical médian (V-V) de ladite sonde ; et
ledit dispositif comportant de plus :
• des seconds moyens d'articulation de ladite sonde (11) sur ledit aéronef, autour d'un second axe d'articulation (X-X) parallèle audit axe longitudinal (L-L) de l'aéronef ;
• des seconds moyens (16) pour faire tourner ladite sonde (11) et ledit premier axe d'articulation (8) autour dudit second axe d'articulation (X-X) pour faire prendre à ladite sonde (11) la position inclinée combinée particulière pour laquelle non seulement les mesures délivrées par lesdits capteurs directifs médians excentrés (4, 5), mais encore les mesures délivrées par lesdits capteurs directifs latéraux (13, 14) sont égales ; et
• des seconds moyens (16A) pour mesurer la valeur particulière de l'angle de rotation dudit second axe d'articulation dans ladite position inclinée combinée particulière de la sonde, ledit angle de rotation étant représentatif de l'angle de dérapage dudit aéronef.

9. Dispositif selon la revendication 8,
**caractérisé en ce que** :
- les premiers moyens (9) pour faire tourner la sonde (11) autour du premier axe d'articulation (8) correspondent à un vérin, lesdits premiers moyens étant pourvus d'un organe d'actionnement mobile (9A) correspondant à un piston,
- les seconds moyens (16) pour faire tourner la sonde (11) et le premier axe d'articulation (8) autour du second axe d'articulation (X-X) correspondent à un vérin, lesdits seconds moyens étant pourvus d'un organe d'actionnement mobile (16A) correspondant à un piston.

10. Aéronef,
**caractérisé en ce qu'**il comporte un dispositif de mesure d'incidence et de dérapage tel que celui spécifié selon l'une quelconque des revendications 8 ou 9.

## Patentansprüche

1. Verfahren zum Messen des Gesamtdrucks, des Anstellwinkels und des Schiebewinkels der longitudinalen Achse (L-L) eines Luftfahrzeugs bezüglich des relativen Winds, in welchem Verfahren eine Sonde (11) eingesetzt wird, welche an ihrem profilierten vorderen Ende (2) mit einem zentralen Richtungssensor (3), welcher in dem Schnittpunkt der horizontalen (H-H) und vertikalen (V-V) Mittelebenen der Sonde vorgesehen ist, und mit wenigstens zwei exzentrischen Mittel-Richtungssensoren (4, 5) versehen ist, welche parallel zu dem zentralen Richtungssensor (3) und in gleichem Abstand von letzterem angeordnet sind, beiderseits der horizontalen Mittelebene (H-H) der Sonde, wobei der zentrale Richtungssensor (3) ein Pitot-Rohr ist, wobei in dem Verfahren:
- die Sonde an dem Luftfahrzeug um eine erste Gelenkachse (8) parallel zu der horizontalen Mittelebene (H-H) der Sonde und orthogonal zu der longitudinalen Achse (L-L) des Luftfahrzeugs angelenkt wird;
- die Sonde (11) um die erste Gelenkachse (8) geschwenkt wird, um die Sonde dazu zu bringen, die bestimmte geneigte Position einzunehmen, für welche die Messungen, welche von den exzentrischen Mittel-Richtungssensoren (4, 5) geliefert werden, gleich sind; und
- der bestimmte Neigungswinkel (α) gemessen wird, welcher in dieser bestimmten geneigten Position von der horizontale Mittelebene (H-H) der Sonde mit der longitudinalen Achse (L-L) des Luftfahrzeugs gebildet wird, wobei der bestimmte Neigungswinkel (α) den Anstellwinkel repräsentiert,
- die Sonde (11) an ihrem vorderen Ende zusätzlich zu dem zentralen Richtungssensor (3) und den exzentrischen Mittel-Richtungssensoren (4, 5) mit wenigstens zwei lateralen Richtungssensoren (12, 13) ausgerüstet wird, welche zu dem zentralen Richtungssensor (3) parallel und in gleichem Abstand von letzterem angeordnet sind, beiderseits der vertikalen Mittelebene (V-V) der Sonde (11), und um zusätzlich das Schieben des Luftfahrzeugs zu messen:
- die Sonde (11) an dem Luftfahrzeug um eine zweite Gelenkachse (X-X) parallel zu der longitudinalen Achse (L-L) des Luftfahrzeugs angelenkt wird;
- die Sonde (11) und die erste Gelenkachse (8) um die zweite Gelenkachse (X-X) geschwenkt werden, um die Sonde (11) dazu zu bringen, die bestimmte kombinierte geneigte Position einzunehmen, für welche nicht nur die von den exzentrischen Mittel-Richtungssensoren (4, 5) gelieferten Messungen, sondern ebenfalls die von den lateralen Richtungssensoren (13, 14) gelieferten Messungen gleich sind;
- der bestimmte Wert des Rotationswinkels der zweiten Gelenkachse gemessen wird, in welcher bestimmten kombinierten geneigten Position der Sonde (11) der Rotationswinkel den Schiebewinkel repräsentiert;
- der Gesamtdruck durch den zentralen Richtungssensor (3) gemessen wird.

2. Verfahren nach Anspruch 1,
**dadurch gekennzeichnet, dass** während des Flugs des Luftfahrzeugs kontinuierlich der bestimmte Neigungswinkel bestimmt wird, welcher von der horizontalen Mittelebene (H-H) der Sonde mit der longitudinalen Achse (L-L) des Luftfahrzeugs gebildet wird, sowie der bestimmte Wert des Rotationswinkels der zweiten Gelenkachse.

3. Verfahren nach einem der Ansprüche 1 oder 2,
**dadurch gekennzeichnet, dass** der zentrale Richtungssensor (3), die exzentrischen Mittel-Richtungssensoren (4, 5) und die lateralen Richtungssensoren (12, 13) von derselben Art sind.

4. Verfahren nach Anspruch 3,
**dadurch gekennzeichnet, dass** der zentrale Richtungssensor (3), die exzentrischen Mittel-Richtungssensoren (4, 5) und die lateralen Richtungssensoren (12, 13) Drucksensoren sind.

5. Verfahren nach Anspruch 3,
**dadurch gekennzeichnet, dass** der zentrale Richtungssensor (3), die exzentrischen Mittel-Richtungssensoren (4, 5) und die lateralen Richtungssensoren (12, 13) Temperatursensoren sind, wie beispielsweise Thermoelemente.

6. Verfahren nach einem der Ansprüche 1 bis 5,
**dadurch gekennzeichnet,**
- **dass** zum Schwenken der Sonde (11) um die erste Gelenkachse (8) ein Stellglied (9) verwendet wird, welches mit einem beweglichen Stellelement (9A) versehen ist, und der bestimmte Neigungswinkel (α) durch die entsprechende Position des beweglichen Stellelements (9A) des Stellglieds (9) gemessen wird; und
- **dass** zum Schwenken der Sonde (11) und der ersten Gelenkachse (8) um die zweite Gelenkachse (X-X) ein Stellglied (16) verwendet wird, welches mit einem beweglichen Stellelement (16A) versehen ist, und der Wert des Rotationswinkels der zweiten Gelenkachse (X-X) durch die entsprechende Position des beweglichen Stellelements (16A) des Stellglieds (16) gemessen wird.

7. Verfahren nach einem der Ansprüche 1 bis 6,
**dadurch gekennzeichnet, dass**:
- das Stellglied (9), welches die Sonde (11) um die erste Gelenkachse (8) schwenkt, einem Zylinder entspricht, und das bewegliche Stellelement (9A) einem Kolben entspricht, wobei der bestimmte Neigungswinkel (α) durch die entsprechende Position des Kolbens gemessen wird,
- das Stellglied (16), welches die Sonde (11) und die erste Gelenkachse (8) um die zweite Gelenkachse (X-X) schwenkt, einem Zylinder entspricht, und das bewegliche Stellelement (16A) einem Kolben entspricht, wobei der Wert des Rotationswinkels der zweiten Gelenkachse (X-X) durch die entsprechende Position des Kolbens gemessen wird.

8. Vorrichtung zum Messen des Gesamtdrucks, des Anstellwinkels (α) und des Schiebewinkels der longitudinalen Achse (L-L) eines Luftfahrzeugs bezüglich eines relativen Winds, welche Vorrichtung eine Sonde (11) umfasst, welche an ihrem profilierten vorderen Ende (2) mit einem zentralen Richtungssensor (3), welcher an einem Schnittpunkt von horizontalen (H-H) und vertikalen (V-V) Mittelebenen der Sonde (11) angeordnet ist, und wenigstens zwei exzentrischen Mittel-Richtungssensoren (4, 5) versehen ist, welche parallel zu dem zentralen Richtungssensor (3) und in gleichem Abstand von letzterem angeordnet sind, beiderseits der horizontalen Mittelebene (H-H) der Sonde, wobei der zentrale Richtungssensor (3) ein Pitot-Rohr ist, welches in der Lage ist, den Gesamtdruck zu messen, die Vorrichtung umfassend:
- erste Mittel (7) zum Anlenken der Sonde (11) an dem Luftfahrzeug um eine erste Gelenkachse (8) parallel zu der horizontalen Mittelebene (H-H) der Sonde und orthogonal zu der longitudinalen Achse (L-L) des Luftfahrzeugs;
- erste Mittel (9) zum Schwenken der Sonde (11) um die erste Gelenkachse (8), um die Sonde dazu zu bringen, die bestimmte geneigte Position einzunehmen, für welche die von den exzentrischen Mittel-Richtungssensoren (4, 5) gelieferten Messungen gleich sind; und
- erste Mittel (9A) zum Messen des bestimmten Neigungswinkels, welcher in dieser bestimmten geneigten Position von der horizontalen Mittelebene (H-H) der Sonde mit der longitudinalen Achse (L-L) des Luftfahrzeugs gebildet wird, wobei der bestimmte Neigungswinkel (α) den Anstellwinkel repräsentiert,
wobei die Sonde (11) an ihrem vorderen Ende zusätzlich zu dem zentralen Richtungssensor (3) und den exzentrischen Mittel-Richtungssensoren (4, 5) mit wenigstens zwei lateralen Richtungssensoren (13, 14) ausgerüstet ist, welche zu dem zentralen Richtungssensor (3) parallel und in gleichem Abstand von letzterem angeordnet sind, beiderseits der vertikalen Mittelebene (V-V) der Sonde; und
wobei die Vorrichtung ferner umfasst:
- zweite Mittel zum Anlenken der Sonde (11) an dem Luftfahrzeug um eine zweite Gelenkachse (X-X) parallel zu der longitudinalen Achse (L-L) des Luftfahrzeugs;
- zweite Mittel (16) zum Schwenken der Sonde (11) und der ersten Gelenkachse (8) um die zweite Gelenkachse (X-X), um die Sonde (11) dazu zu bringen, die bestimmte kombinierte geneigte Position einzunehmen, für welche nicht nur die von den exzentrischen Mittel-Richtungssensoren (4, 5) gelieferten Messungen, sondern ebenfalls die von den lateralen Richtungssensoren (13, 14) gelieferten Messungen gleich sind; und
- zweite Mittel (16A) zum Messen des bestimmten Werts des Rotationswinkels der zweiten Gelenkachse, in welcher bestimmten kombinierten geneigten Position der Sonde der Rotationswinkel den Schiebewinkel des Luftfahrzeugs repräsentiert.

9. Vorrichtung nach Anspruch 8,
**dadurch gekennzeichnet, dass**:
- die ersten Mittel (9) zum Schwenken der Sonde (11) um die erste Gelenkachse (8) einem Zylinder entsprechen, wobei die ersten Mittel mit einem beweglichen Stellelement (9A) versehen sind, welches einem Kolben entspricht,
- die zweiten Mittel (16) zum Schwenken der Sonde (11) und der ersten Gelenkachse (8) um die zweite Gelenkachse (X-X) einem Zylinder entsprechen, wobei die zweiten Mittel mit einem beweglichen Stellelement (16A) versehen sind, welches einem Kolben entspricht.

10. Luftfahrzeug,
**dadurch gekennzeichnet, dass** es eine Vorrichtung zum Messen eines Anstellens und eines Schiebens umfasst, wie von einem der Ansprüche 8 oder 9 spezifiziert.

## Claims

1. Method for measuring the total pressure, the angle of attack and the sideslip angle of the longitudinal axis (L-L) of an aircraft with respect to the relative wind, in which method a probe (11) is used which is provided, at the profiled front end thereof, with a central directional sensor (3) which is arranged at the intersection of the horizontal (H-H) and vertical (V-V) midplanes of said probe, and with at least two eccentric midplane directional sensors (4, 5) which are in parallel with said central directional sensor (3) and are arranged at an equal distance therefrom on either side of said horizontal midplane (H-H) of said probe, the central directional sensor (3) being a Pitot tube according to which method:
- said probe is pivotally connected to said aircraft about a first pivot axis (8) which is in parallel with said horizontal midplane (H-H) of said probe and is orthogonal to said longitudinal axis (L-L) of the aircraft;
- said probe (11) is rotated about said first pivot axis (8) in order make said probe assume the particular inclined position in which the measurements provided by said eccentric midplane directional sensors (4, 5) are equal; and
- the particular angle of inclination (a) which is produced, in this particular inclined position, between said horizontal midplane (H-H) of the probe and the longitudinal axis (L-L) of the aircraft is measured, the particular angle of inclination (α) being representative of the angle of attack,
- said probe (11) is provided, at the front end thereof and in addition to said central directional sensor (3) and said eccentric midplane directional sensors (4, 5), with at least two lateral directional sensors (12, 13) which are in parallel with said central directional sensor (3) and are arranged at an equal distance therefrom on either side of said vertical midplane (V-V) of said probe (11), and in that, in addition, in order to measure the sideslip of the aircraft:
- said probe (11) is pivotally connected to said aircraft about a second pivot axis (X-X) which is in parallel with said longitudinal axis (L-L) of the aircraft;
- said probe (11) and said first pivot axis (8) are rotated about said second pivot axis (X-X) in order make said probe (11) assume the particular combined inclined position in which not only are the measurements provided by said eccentric midplane directional sensors (4, 5) equal, but so too are the measurements provided by said lateral directional sensors (13, 14); and
- the particular value of the angle of rotation of said second pivot axis in said particular combined inclined position of the probe (11) is measured, the angle of rotation being representative of the sideslip angle ;
- the total pressure is measured by the central directional sensor (3).

2. Method according to claim 1,
**characterised in that**, during the flight of the aircraft, said particular angle of inclination which is produced between the horizontal midplane (H-H) of the probe and the longitudinal axis (L-L) of the aircraft, and said particular value of the angle of rotation of said second pivot axis are continuously determined.

3. Method according to either claim 1 or claim 2,
**characterised in that** said central directional sensor (3), said eccentric midplane directional sensors (4, 5), and said lateral directional sensors (12, 13) are of the same type.

4. Method according to claim 3,
**characterised in that** said central directional sensor (3), said eccentric midplane directional sensors (4, 5), and said lateral directional sensors (12, 13) are pressure sensors.

5. Method according to claim 3,
**characterised in that** said central directional sensor (3), said eccentric midplane directional sensors (4, 5), and said lateral directional sensors (12, 13) are temperature sensors, such as thermocouples.

6. Method according to any of claims 1 to 5,
**characterised**:
- **in that**, in order to rotate said probe (11) about said first pivot axis (8), an actuator (9) provided with a movable actuation member (9A) is used, and said particular angle of inclination (α) is measured by the corresponding position of said movable actuation member (9A) of the actuator (9); and
- **in that**, in order to rotate said probe (11) and said first pivot axis (8) about said second pivot axis (X-X), an actuator (16) provided with a movable actuation member (16A) is used, and said value of the angle of rotation of said second pivot axis (X-X) is measured by the corresponding position of said movable actuation member (16A) of said actuator (16).

7. Method according to any of claims 1 to 6, **characterized in that**:
- the actuator (9) which rotates said probe (11) around said first pivot axis (8) corresponds to an actuating cylinder and the movable actuation member (9A) corresponds to a piston, the said particular angle of incliation (α) being measured by the corresponding position of the piston,
- the actuator (16) rotating said probe (11) and the first pivot axis (8) around the second pivot axis (X-X) corresponds to an actuating cylinder and the movable actuation member (16A) corresponds to a piston, the value of the angle of rotation of the second pivot axis (X-X) being measured by the corresponding position of the piston.

8. Device for measuring, the total pressure, the angle of attack (α) and the sideslip angle of the longitudinal axis (L-L) of an aircraft with respect to the relative wind, comprising a probe (11) which is provided, at the profiled front end (2) thereof, with a central directional sensor (3) which is arranged at the intersection of the horizontal (H-H) and vertical (V-V) midplanes of said probe (11), and with at least two eccentric midplane directional sensors (4, 5) which are in parallel with said central directional sensor (3) and are arranged at an equal distance therefrom on either side of said horizontal midplane (H-H) of said probe, the central directional sensor (3) being a pitot tube able to mesure the total pressure, said device comprising:
• first means (7) for pivotally connecting said probe (11) to said aircraft about a first pivot axis (8) which is in parallel with said horizontal midplane (H-H) of said probe and orthogonal to said longitudinal axis (L-L) of the aircraft;
• first means (9) for rotating said probe (11) about said first pivot axis (8) in order to make said probe assume the particular inclined position in which the measurements provided by said eccentric midplane directional sensors (4, 5) are equal; and
• first means (9A) for measuring the particular angle of inclination which is produced, in this particular inclined position, between said horizontal midplane (H-H) of the probe and the longitudinal axis (L-L) of the aircraft, the particular inclination angle (α) being representative of the angle of attack ;
- said probe (11) being provided, at the front end thereof, in addition to said central directional sensor (3) and said eccentric midplane directional sensors (4, 5), with at least two lateral directional sensors (13, 14) which are in parallel with said central directional sensor (3) and are arranged at an equal distance therefrom on either side of said vertical midplane (V-V) of said probe; and
- said device further further comprising :
• second means for pivotally connecting said probe (11) to said aircraft about a second pivot axis (X-X) which is in parallel with said longitudinal axis (L-L) of the aircraft;
• second means (16) for rotating said probe (11) and said first pivot axis (8) about said second pivot axis (X-X) in order to make said probe (11) assume the particular combined inclined position in which not only are the measurements provided by said eccentric midplane directional sensors (4, 5) equal, but so too are the measurements provided by said lateral directional sensors (13, 14); and
• second means (16A) for measuring the particular value of the angle of rotation of said second pivot axis in said particular combined inclined position of the probe, said angle of rotation representing the sideslip angle of said aircraft.

9. Device according to claim 8, **characterized in that**:
- the first means (9) to rotate the probe (11) around said first pivot axis (8) correspond to an actuating cylinder, the said first means comprising a movable actuation member (9A) corresponding to a piston ;
- the second means (16) to rotate the probe (11) and the first pivot axis (8) around the second pivot axis (X-X) correspond to an actuating cylinder, the said second means comprising a movable actuation member (16A) corresponding to a piston.

10. Aircraft,
**characterised in that** it comprises a device for measuring the angle of attack and the sideslip of the kind specified according to any of claims 8 or 9.
